# EUROPEAN PATENT APPLICATION

(11) **EP 2 228 985 A1**
(43) Date of publication of application: **15.09.2010**
(21) Application number: 09163024.4
(22) Date of filing: 17.06.2009
(51) Int. Cl.: H04N 5/445

(54) **Combined television data stream, method for displaying television channel and method for generating combined television data stream**

(30) Priority: 13.03.2009 EP 09155182
(71) Applicant: ADVANCED DIGITAL BROADCAST S.A., 1292 Chambesy (CH)
(72) Inventor: Lazarski, Wojciech, 65-012, Zielona Gora (PL); Przybylek, Piotr, 65-119, Zielona Gora (PL)
(74) Representative: Pawlowski, Adam

(57) **Abstract**

The object of the invention is a combined television data stream 101 comprising a combined video data stream 102, comprising combined video frames 301, which comprise source video frames 304, 305 of at least two source television channels, the source video frames being arranged at spatially distinct sections of the combined video frames 301, at least two audio data streams 104, 107, each audio data stream comprising source audio data of one of the source television channels, description data 109, comprising video section descriptors 110, identifying the sections of the combined video frames 301, the video section descriptors 110 corresponding to each source television channel, and audio stream descriptors 111, identifying the audio data streams 104, 107, the audio stream descriptors 111 corresponding to each source television channel. A further object of the invention is a method for displaying a television channel, a television receiver, a method and a device for generating the combined television data stream.

## Description

The invention presented herein relates to television systems, in particular to a combined television data stream and a method for displaying a television channel.

The present invention is aimed at providing a rapid channel change experience to a user of a television system.

Due to constantly increasing complexity of television systems, television signals and amount of data transmitted to receivers, channel switching has become a bottleneck in state of the art television receivers. It has been a longstanding problem to enable a user of a digital television receiver to switch television channels without experiencing any visible delay.

In addition to complexity of the task of acquiring and processing television channels data, including tuning and buffers filling delays, there are additional delay factors related to standards of television data coding, for example MPEG (Moving Picture Experts Group), which by default cause delays due to data spread in the source data stream, specifically for example PSI (Program Specific Information) data and decryption plus conditional access data. Other factors causing the delay include the fact that video data received at a T0 time are to be displayed at a time T0 + 3s for example.

The accumulation of all these delays typically leads to an overall channel change latency of 1.5 seconds to over 4 seconds.

One group of methods, solving the aforementioned problem, is aimed at providing large buffers for pre-storing television signal data and later, upon invoking a channel change, processing the data pre-stored in the buffers, at a higher than real-time rate, thereby reducing channel change delay. An example of such a solution has been disclosed in a US patent application "US20070234395A1: SPEEDING UP CHANNEL CHANGE".

One drawback of such solutions is a memory requirement, which in case of several seconds buffering for several channels may lead to use of additional 50 or even 100 megabytes of high-speed random access memory. This is inefficient in terms of cost.

Another prior art publication US5633683, "ARRANGEMENT AND METHOD FOR TRANSMITTING AND RECEIVING MOSAIC VIDEO SIGNALS INCLUDING SUB-PICTURES FOR EASY SELECTION OF A PROGRAM TO BE VIEWED", which is considered to be the closest prior art, presents a television video mosaic system. Disclosed therein is a "Channel Navigation System", which allows a user to get an overview of the digital programs provided, and to easily select a desired program for viewing. The method of that system includes the transmission (in a separate program of a transport stream) of a video stream representing a video mosaic picture, the sub-pictures of which are miniature versions of the video stream of other programs in that transport stream.

Thanks to this solution a viewer may at once preview several channels. Owing to such an overview, less channels changes are typically needed in a TV system. This is particularly useful for channel grazing. Upon selection of a channel, presented in a mosaic, tuning parameters are read and a typical channel change procedure is invoked.

Drawbacks of channel mosaics include lower video quality and a common mosaic channel audio stream. Moreover, such a mosaic is a separate television channel, which has to be transmitted in the transport stream, as defined with respect to Fig. 8 of US 5633683. Therefore the quality of the remaining channels of the transport stream has to be reduced or number of channels in one transport stream has to be decreased in order to multiplex the additional mosaic channel according to that system.

Presently, television services providers offer "mosaic" channels in which live feeds of multiple programming are broadcast on a single video channel on the provider's networks. Currently, mosaic channels display a scaled down "windows" of currently broadcasting programs selected by the provider in one or more categories (i.e., news, sports, etc.) also selected by the provider, along with non-program based audio from a live host or background music. If the user wishes to view one of the mosaic channels in full screen mode, together with the audio associated with that channel, a typical channel procedure is invoked.

Hence, there exists a problem of time delays between the moment when a user chooses a television channel to display and the moment at which an image and audio data from the selected television channel are presented to the user.

It is therefore an object of the present invention to provide an improved television system, offering rapid switching of television channels by utilizing a combined television data stream and a method for displaying a television channel.

A combined television data stream according to the invention comprises a combined video data stream, comprising combined video frames, which comprise source video frames of at least two source television channels, the source video frames being arranged at spatially distinct sections of the combined video frames, at least two audio data streams, each audio data stream comprising source audio data of one of the source television channels, description data comprising video section descriptors, identifying the sections of the combined video frames, the video section descriptors corresponding to each source television channel, and audio stream descriptors, identifying the audio data streams the audio stream descriptors corresponding to each source television channel.

At least two audio data streams may comprise source audio data of one source television channel.

The description data may further comprise optional data corresponding to at least one source television channel, the optional data comprising TELETEXT data, closed captions data, software data, program guide data, source channel frame resolution and/or source channel service identifier data.

The video section descriptors may identify the sections by pixel coordinates set within the combined video frame.

The combined television data stream can be transmitted in a single data stream.

The source television channels may share a common feature, the feature defining a common source frame size, channel genre, source audio stream language, adult rating and/or conditional access rights.

A method for displaying a television channel according to the invention comprises the steps of receiving a combined television data stream according to the invention, receiving a request to display a source television channel, determining the video section descriptor and at least one audio stream descriptor corresponding to the requested source television channel, extracting, from the combined video data stream, the source video frames arranged at a fragment of the combined video frames identified by the determined video section descriptor, setting the extracted source video frames as a current channel video data, setting the audio data stream identified by the determined audio stream descriptor as a current channel audio data, processing the current channel video data and the current channel audio data so as to display the requested source television channel.

The method may further comprise the steps of receiving a request to display a further source television channel, determining the video section descriptor corresponding to the requested further source television channel, extracting, from the combined video data stream, the source video frames arranged at the fragment of the combined video frames identified by the plurality of the determined video section descriptors, mixing the extracted source video frames associated with the further source television channel with the extracted source video frames associated with the current television channel.

A further object of the invention is also a computer program comprising program code means for performing all the steps of the method for displaying a television channel according to the invention, as well as a computer readable medium having computer-executable instructions performing all the steps of the method for displaying a television channel according to the invention.

The object of the invention is also a television receiver comprising a stream receiver configured to receive a combined television data stream according to the invention, a request interface configured to receive a request to display a source television channel, a stream analyzer configured to determine the video section descriptor and at least one audio stream descriptor corresponding to the requested source television channel, a video extractor configured to extract, from the combined video data stream, the source video frames arranged at a fragment of the combined video frames identified by the determined video section descriptor and to provide the extracted source video frames as a current channel video data to a video decoder, and an audio extractor configured to provide the audio data stream identified by the determined audio stream descriptor as a current channel audio data to an audio decoder.

A further object of the invention is a method for generating a combined television data stream according to the invention, the method comprising the steps of receiving a plurality of source television channels, combining video frames of the plurality of the source television channels into combined video frames, encoding the combined video frames to form a combined video data stream, selecting audio data streams corresponding to the plurality of the source television channels, generating description data corresponding to the plurality of the source television channels, and mixing the combined video data stream, the audio data streams and the description data to output the combined television data stream.

A further object of the invention is also a computer program comprising program code means for performing all the steps of the method for generating the combined television data stream according to the invention, as well as a computer readable medium having computer-executable instructions performing all the steps of the method for generating the combined television data stream according to the invention.

The object of the invention is also a device for generating a combined television data stream according to the invention, the device comprising a plurality of data inputs configured to receive a plurality of source television channels, a video analyzer configured to analyze the parameters of the video data streams of the plurality of the source television channels and determine the structure of the combined video data stream, a video combiner configured to generate combined video frames comprising a mosaic of video frames of the plurality of the source television channels, a video encoder configured to encode the combined video frames to generate the combined video data stream, a supplementary data mixer configured to generate supplementary data comprising at least audio data streams corresponding to the plurality of the source television channels, and a description data generator configured to generate description data corresponding to the plurality of the source television channels.

By providing a combined television data stream, comprising a combined video data stream with combined video frames, which comprise source video frames of at least two source television channels, the channel change between the source television channels occurs quickly, as the video data are available in the combined video frames of the currently received combined television data stream and the channel change procedure involves only selection of a different section of the video frames of the combined video data stream to be displayed.

These and other objects of the invention presented herein are accomplished in accordance with the principles of the presented invention by providing an improved system and method for rapid television channels switching. Further details and features of both the system and the method, their nature and various advantages will become more apparent from the accompanying drawing, and the following detailed description of the preferred embodiments shown in the drawing, in which:
FIG. 1 presents an example of a combined television data stream according to the present invention;
FIG. 2 presents a method for displaying a television channel comprised in the combined television data stream according to the present invention;
FIG. 3A presents an first example of a combined video frame;
FIG. 3B presents a second example of a combined video frame;
FIG. 3C presents a third example of a combined video frame;
FIG. 4 depicts a display showing sections of a combined video data stream;
FIG. 5 shows a comparison of channel change delays;
FIG. 6 shows a television receiver for displaying the television channel comprised in the combined television data stream;
Fig. 7 shows a method for generating the combined television data stream;
FIG. 8 shows a device for generating the combined television data stream.

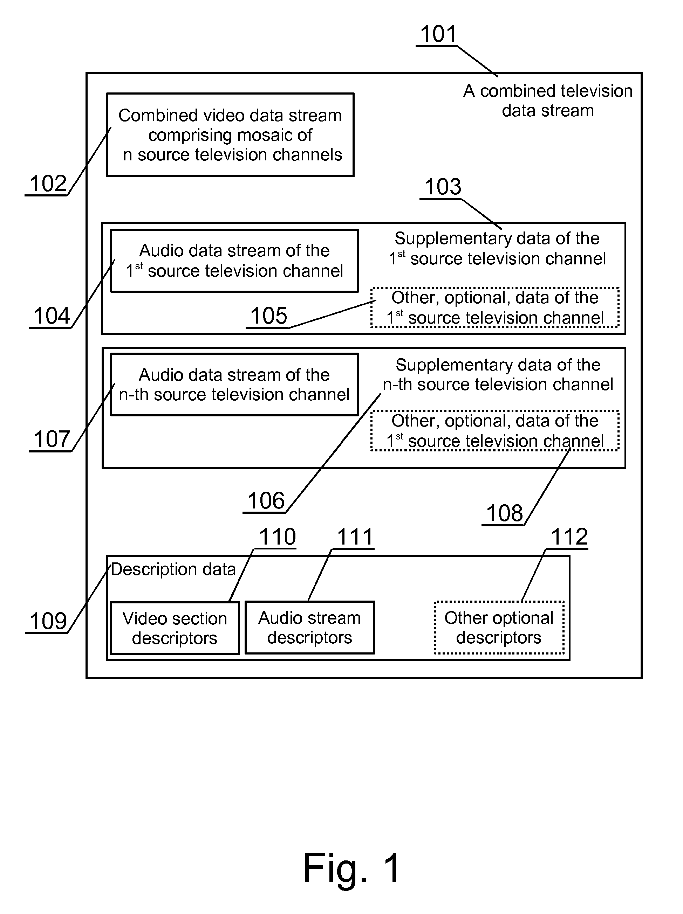

FIG. 1 shows an exemplary structure of a combined television data stream 101 according to the invention. The combined television data stream 101 comprises data of at least two source television channels, wherein the video data of the source television channels are comprised in a combined video data stream 102 and supplementary data 103, 106, such as audio data streams 104, 107 and other optional data 105, 108 are encoded separately.

A source television channel is a typical television data channel, originally transmitted in a data stream, such an MPEG stream, comprising video and audio data as well as supplementary data. Such a channel is for example HBO or one of Discovery channels.

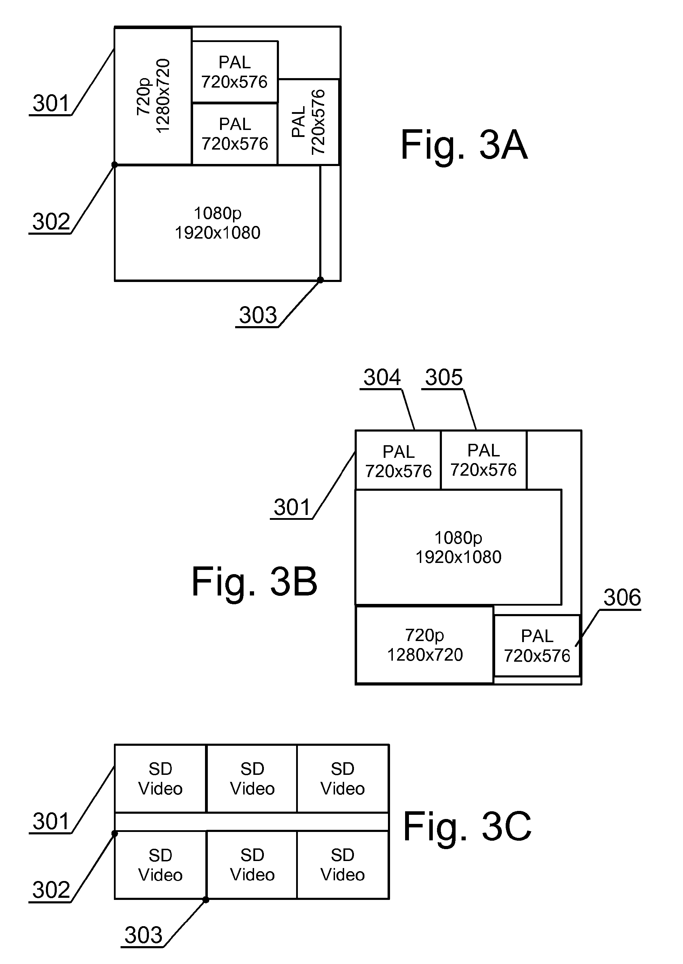

The video data of the source television channels are comprised in a combined video data stream 102. The combined video data stream 102 comprises combined video frames 301 (as shown in Fig. 3A to 3C), which comprise source video frames 304, 305, 306 of at least two source television channels, the source video frames being arranged at spatially distinct sections, defined by coordinates 302, 303, of the combined video frames 301.

Source audio data of the source television channels are comprised in audio data streams 104, 107. It is to be understood that more than one audio data stream 104, 107 may be associated with a single source television channel. For example, two audio data streams may comprise two different language versions (i.e. source audio data) of one source television channel.

Additionally the supplementary data 103, 106 may comprise any other optional data 105, 108, such as TELETEXT, closed captions, software, program guide data and/or other data which are associated with the source television channels. Preferably, all other optional data associated with the source television channels is contained in the combined television data stream.

Additionally the combined television data stream 101 comprises description data 109 defining contents of the combined television data stream. The description data 109 comprise video section descriptors 110, identifying the sections, defined by coordinates 302, 303, of the combined video frames 301, the video section descriptors 110 corresponding to each source television channel. The description data 109 further comprise audio stream descriptors 111, identifying the audio data streams 104, 107, the audio stream descriptors 111 corresponding to each source television channel. Furthermore, the description data 109 may comprise other, optional descriptors 112, such as descriptors defining resolutions of the frames of the source television channels or service identifiers, or any other locators, for each source television channel.

A combined television data stream according to the present invention may comprise a set of several HBO or Discovery source television channels, such that video data of the source television channels is comprised in the combined video data stream. Audio and other data of the source television channels of the set are included in the supplementary data of the combined television data stream.

Preferably, the source television channels comprised in the combined television data stream share a common feature. The common feature may be a common source frame size, channel genre, source audio stream language, adult rating and/or conditional access rights.

Preferably, the combined television data stream is transmitted in a single data stream, such as a single MPEG transport stream

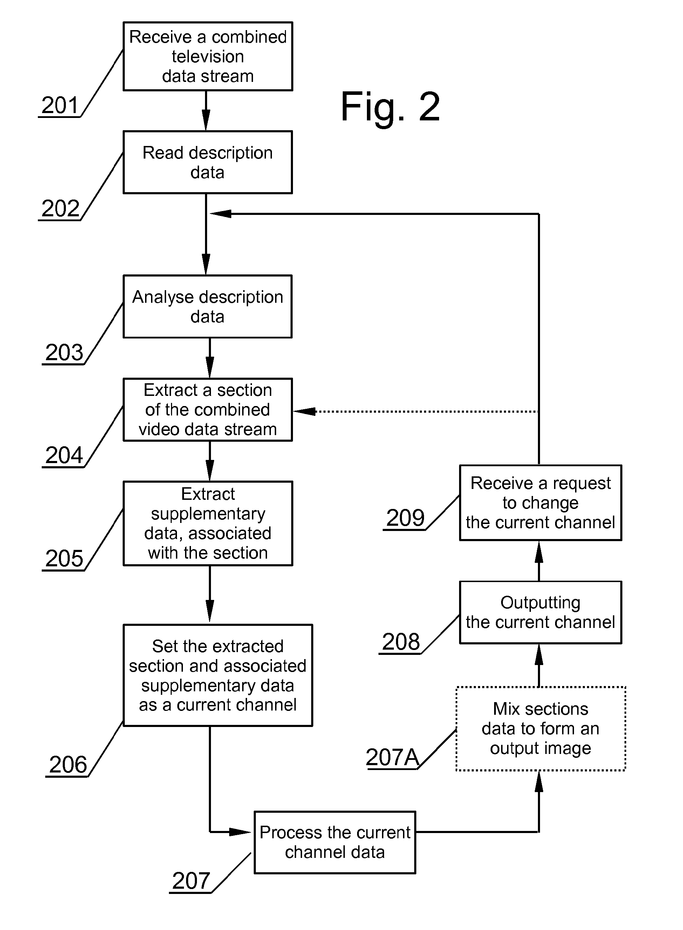

FIG. 2 presents a method for displaying a channel comprised in the combined television data stream according to the present invention. The procedure starts at step 201, where a combined television data stream is received by a television data receiver. The receiver may by a typical digital television receiver-decoder called a set-top box (STB), configured to receive television data conveyed for example in an MPEG compatible signal, and configured to operate in accordance with the method according to the invention.

Step 201 is activated by a request to display a source television channel comprised in the combined television data stream. The request may be a viewing or a recording request initiated by a user or an automatic system.

Next, at step 202, description data 109 of the combined television stream is read by the television data receiver. In one embodiment description data are conveyed within the combined television data stream. In other embodiments, the description data may be conveyed via a separate description data stream, which is to be separately received by the television data receiver in step 101 of the procedure.

In such embodiment, the description data stream may be received before or after the data of the combined television data stream is received.

Preferably, at this time the receiver is properly tuned and a conditional access system is set up if required. A video decoder of the receiver decodes required data of the combined video data stream 102 contained in the received combined television data stream 101. Video decoding is the most important task and is to be executed as soon as possible. Corresponding audio and supplementary data, for example TELETEXT, can be processed at a later time, for example when steps 206 or 207 of the method are executed.

After data in steps 201 and 202 are correctly received, the receiver starts processing and/or analysis of the description data in step 203 of the method. The analysis concerns checking what actually is the content of the received combined television data stream and how this content is organised within the combined television data stream. Based on the analysis, data corresponding to the requested source television channel, i.e. a video section descriptor and at least one audio stream descriptor, are determined.

Next, the procedure advances to step 204, where a fragment of the combined data stream is extracted. More precisely, the source video frames arranged at the fragment of the combined video frames identified by the determined video section descriptor, are extracted.

Optionally, as described with reference to Fig. 3B, the request to display a source television channel may refer to a further source channel, and in step 204 a fragment of the combined video frames comprising a plurality of sections associated with the requested current and further source television channels may be selected and extracted. The fragment may be uniform, i.e. including adjacent sections 304 and 305 of the combined video frame, or non-uniform, i.e. including non-adjacent sections, for example 304 and 306, of the combined video frame. For example, the request to display may be a Picture-in-Picture (PIP) request to display further source television channels in a PIP window, to be mixed in step 207A.

The following step 205 is to extract supplementary data, associated with the section selected at step 204, such as the audio data stream associated with the selected source television channel.

The following step 206, is to set the extracted section of the combined video data stream and associated supplementary data (such as an audio stream) as a current channel. In a typical television system, video data forms a separate data stream. For example, an MPEG transport stream may comprise 8 separate video streams, each representing video data of a separate source channel. In the present invention there is a single combined video data stream 102, which comprises data of a plurality of video streams of source television channels. A section, having coordinates 302, 303, of a combined video frame 301 of the single combined video data stream 101 is thereby used as a current channel video data accordingly.

Preferably, the combined video data stream is prepared such that a combined video frame of the combined video data stream, to be presented at a given time, comprises substantially complete video data of frames, to be presented at the given time, of all of at least two source television channels contained in the combined television data stream.

Typically data constituting a frame of the current channel will be a cut out/copied section of the selected combined video frame of the combined video data stream.

The wording substantially appears mainly due to reasons related to current video transmission and television signal display devices standards, where certain deviations from the standard picture definitions such as 720p, are accepted and treated as proper.

From step 206, the method advances to step 207, where the current channel data are processed in order to prepare the data for presentation to a viewer.

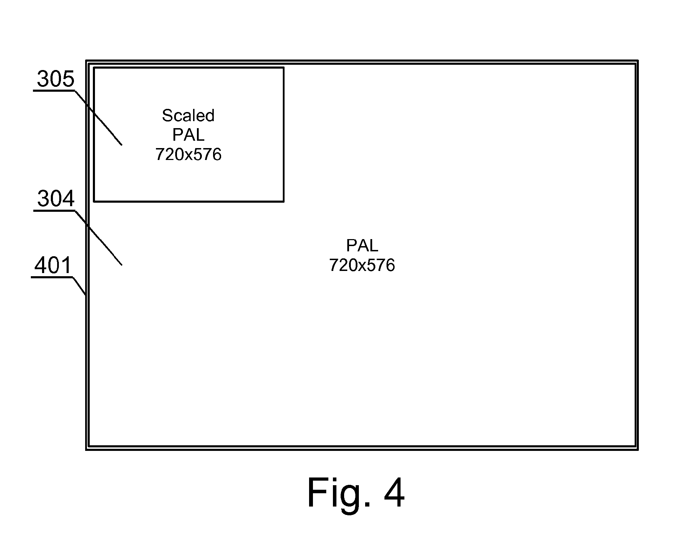

Optionally, in case the fragment extracted in step 204 contained a plurality of sections, the sections video data are mixed in step 207A to form an output image. For example, one section is displayed full-screen and one or further sections are displayed as a Picture-in-Picture window, as shown in Fig. 4. The mixing may include scaling.

The current channel data is subsequently output in step 208. Therefore, in step 208 the extracted fragment of the combined video data stream is displayed and the audio data stream corresponding to the current channel is played.

After step 208 the current television channel is displayed and the receiver awaits for instructions from a user. One of such instructions may be to change the current channel as illustrated in step 209 of the procedure or a request to display a further channel, for example a PIP window. After processing the request the procedure moves to step 203 or 204 depending on the need to analyse description data. This choice may be based on a flag in the system, indicating whether the previous description data have been updated.

FIG. 3A presents a first example of a combined video data stream, according to the present invention. Each frame 301 of the combined video data stream comprises source video frames of five source television channels, for example three SD channels and two HD channels. As identified with the 302 and 303 coordinates, the selected section, of a combined video frame of a single video data stream, to be extracted concerns a HD channel.

In order to allow for better compression of the combined video data stream, source video frames of one or more source television channels may be rotated before composing a combined video frame of the combined video data stream in the head-end system.

In this example, a definition of a section comprises identification of pixel coordinates, set within a picture of the combined video frame of the combined video data stream, between which a given source video frame data can be found.

FIG. 3B presents a second example of a combined video frame 301 of a combined video data stream. This embodiment shows that the 302 and 303 coordinates, defining a fragment to be extracted, may cover more than one source video frame. As depicted, the selected fragment covers both 304 and 305 source video frames.

In another embodiment a non-uniform fragment, comprising a plurality of non-adjacent sections, such as 304 and 306 may be selected. This may be useful, for example, for facilitating a picture-in-picture display system where a first section is assigned as a current channel and a second section is simultaneously extracted, scaled-down and displayed as a picture-in-picture window. An example of such an embodiment has been presented with reference to the optional step 207A as shown in Fig. 2.

FIG. 3C presents a third example of a combined video data stream. This embodiment shows that one HD-sized frame of a combined video data stream comprises data of six SD source video frames.

It is to be understood that a combined video frame of a combined video data stream may comprise, apart from the source video frames of the source television channels, additional video data. Such data may comprise profiled advertisements or additional content related to respective source television channels or other video data.

FIG. 4 depicts a display 401 (for example, as generated after step 208 of the procedure shown in Fig. 2), showing two extracted and mixed sections of a combined television data stream. As can be seen, two sections of a combined video data stream of the combined television data stream are displayed, namely sections 304 and 305, previously described with reference to Fig. 3B. The section 304 has been selected as a current television channel while a scaled down video data of the section 305 is presented in a picture-in-picture window as a further source television channel overlaid on the displayed current channel data 304. The scaling down of the 305 section is preferably executed locally at the receiver.

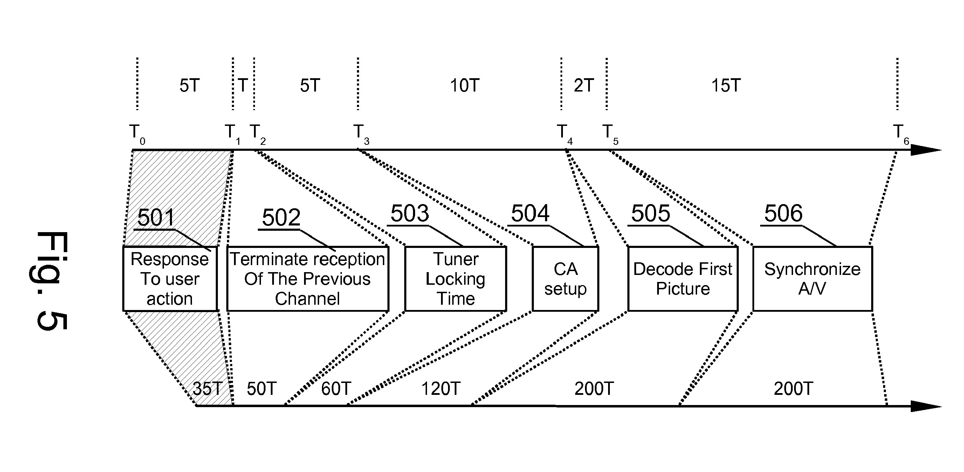

FIG. 5 shows a comparison of channel change delays factors. The delays originating from various sources can be grouped into six main categories. Each of the delays is a range of time, which can be illustrated with relation to other times. For this purpose a typical minimum time, required to stop reception of a current channel and setup parameters for reception of a new current channel, has been set as a time unit for illustrating values of other delays. Typically T is measured in milliseconds.

The drawing presents a best-case scenario on the top time scale and a worst-case scenario on the bottom time scale. It is to be noted that, in order to improve clarity of the figure, the top axis and the bottom axis are of different scales (the total length of the top axis is 38T, while the total length of the bottom axis is 665T).

It is to be noted that a relation between times is illustrative only and based on typical results of measurements run for different platforms, A/V (audio / video) data and transmission/reception methods.

The first time, accounting for a channel change latency, is a time 501 required to process a user action and send a request from a high-level software of the receiver to lower lever software. This time mainly depends on an architecture of the software and processing capabilities of a given hardware platform. Typically the process of 501 takes from 5T to 35T.

The next delay factor 502 is stopping reception of the current channel and setting new configuration of A/V PIDs (Packet Identifier). CA (Conditional Access) service is stopped and next CA service selection starts during 502. This usually depends on a CPU processing power and current system priorities and state. The time 502 varies from T to 50T.

503 is a time required for tuning to a specified data stream, representing the combined television data stream. This time depends on various hardware factors and typically is in a range between 5T to 60T. It is to be understood that tuning is equivalent to proper setting of a signal receiving block in case of, for example, internet protocol television (IPTV).

Assuming the signal is scrambled, the next delay 504 is caused by a setup of the CA system. CA sets up a demultiplexer and awaits for an ECM (Entitlement Control Message) then waits for a SC (Smart Card) to finish its current operation, which may be an EMM (Entitlement Management Message) processing or other channel's ECM processing. Subsequently an ECM is processed with the SC.

Finally the CA system sets keys/PIDs for descramblers and currently received A/V data stream can be descrambled.

The 504 time depends severely on ECM reception frequency and SC processing time. In total the 504 ranges between 10T and 120T.

In order to decode a first picture a data buffer has to be filled with data comprising an I-frame. When there is enough data, in the video buffer, decoding may commence. This time depends most on a head-end configuration, specifically encoder and multiplexer setup. Typical value of 505 delay ranges between 2T and 200T.

As an option, according to the present invention, the whole combined video frame of the combined video data stream need not be decoded. Only data of macroblocks belonging to a selected section may be decoded.

In case when the whole frame of the combined video data stream is decoded, more channel change transition effects, mosaic effects or picture-in-picture effects can be more easily achieved.

The last delay factor, taken into account for this illustration, is synchronization of 'A/V' data 506. Displaying of the first frame is always delayed to achieve a proper synchronization with a PCR (Program Clock Reference). Audio signal can be output almost immediately but usually it is also delayed for synchronization with the PCR.

The time range for an MPEG2 SD channel is usually 15T to 30T while for an H364 HD channel it is typically in a range from 70T to 200T.

Therefore a viewer may have to wait between 38T and 665T in order to watch a new television channel. The typical time will be in the middle of the range, which means a delay of about 3 to 4 seconds for a HD channel.

Upon employing a method according to the present invention, only the 501 time causes a channel change delay when a viewer changes channels within a combined television data stream. This means a channel change seven to almost twenty times faster than in a typical television system, where all the steps would have to be performed after a channel change request. Time required to select a section of a combined television data stream and switch to its supplementary data is negligible when compared to other delays.

This is possible since, according to the present invention, there is no requirement of tuning, changing CA setup of waiting for the next I-Frame to arrive. All data are readily available for all source television channels constituting a combined television data stream.

Therefore for a network of channels, for example 6 or 8, a seamless channel change experience can be achieved by using a combined television data stream, according to the present invention.

The number of source television channels constituting a combined television data stream depends mostly on processing capabilities of a head-end and decoding capabilities of a receiver.

Moreover, PIP requires presently two independent tuners: one supplying the large picture and the other supplying the small picture. With the use of the present method, various PIP or mosaic effects, and channels video feeds alignments can be achieved with a use of a single tuner or a signal receiving block in case of, for example, internet protocol television (IPTV).

Additionally some graphical effects are easy to achieve with a combined video data stream according to the present invention. The viewer is unaware that the current channel being watched is a section of a combined video frame of the combined video data stream. One of the graphical effects, invoked during a channel change, may be for example a zoom out to the mosaic screen and zoom in to another channel. Such an effect may be presented during the 501 time of Fig. 5.

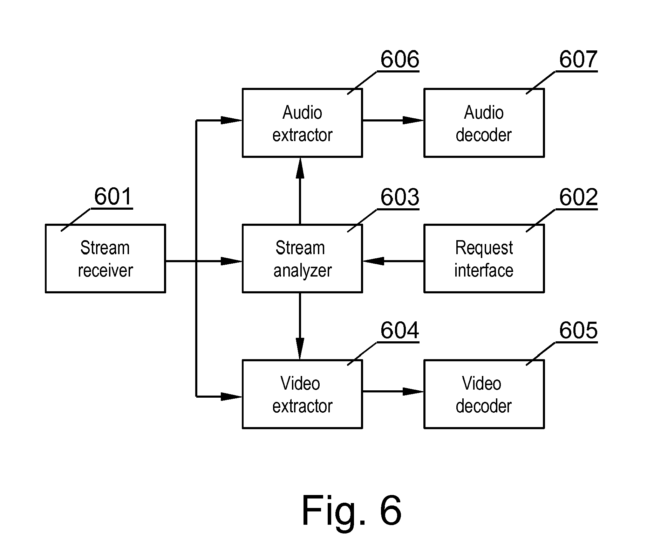

FIG. 6 shows a television receiver for displaying the television channel comprised in the combined television data stream. The receiver comprises a stream receiver 601 for receiving a combined television data stream 101 according to the invention. The receiver may be operable to receive one or more of a satellite, cable, terrestrial, IPTV or a data stream signal.

A request interface 602, such as a remote control unit, a keyboard, a graphical or a voice user interface, is configured to receive a request, to display a source television channel, from a user of the receiver or from a remote control system. The request is passed to a stream analyzer 603, which is configured to determine the video section descriptor 110, identifying the section of the combined video frames 301 of the combined video data stream 102, and at least one audio stream descriptor 111, identifying an audio data stream 104, 106, corresponding to the requested source television channel, by analyzing the description data 109 of the received combined television data stream 101. The stream analyzer may also extract other optional descriptors 112, identifying other optional data 105 of the requested source television channel, to be processed by other units of the receiver.

A video extractor 604 connected to the stream receiver 601 is configured to extract, from the combined video data stream 102, the source video frames 304, 305 arranged at a fragment of the combined video frames 301 identified by the video section descriptor 110 determined by the stream analyzer 603 and to provide the extracted source video frames 304, 305 as a current channel video data to a video decoder 605. The video decoder 605 processes the received video data to display the requested channel. An audio extractor 606 is configured to provide the audio data stream 104, 107 identified by the determined audio stream descriptor 111 as a current channel audio data to an audio decoder 607. The audio decoder 607 processes the received audio data to play the audio of the requested channel.

The technique of the present invention may be implemented in any computing device constituting the television receiver, including mobile phone, PDA's, set-top boxes, portable multimedia players, PCs and similar devices having access to television data.

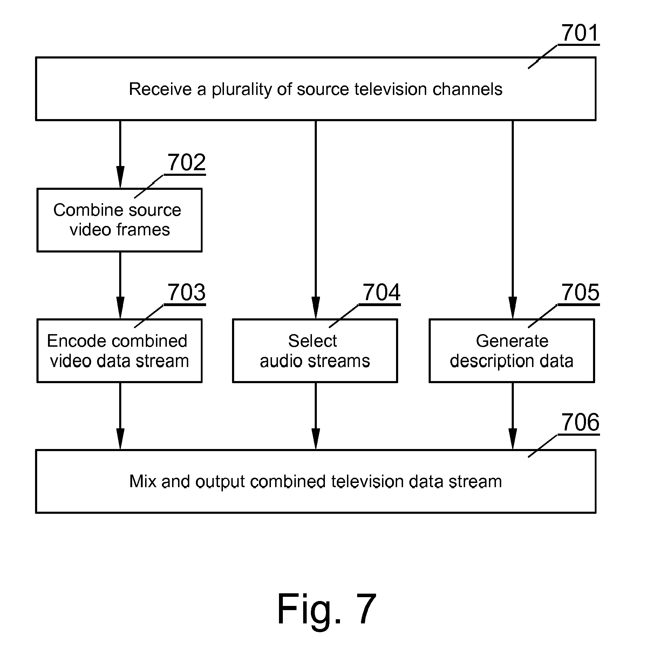

Fig. 7 shows a method for generating the combined television data stream according to the invention. In step 701 a plurality of source television channels are received. Preferably, the source television channels are received as digital streams. In case a source television channel is provided in analogue form, it may be encoded to form a digital stream.

In step 702, the video frames 304, 305 of the plurality of the source television channels are combined into combined video frames 301 and next, in step 703, the combined video frames are encoded to form a combined video data stream 301. Simultaneously, audio data streams 104, 107 corresponding to the plurality of the source television channels are selected. Furthermore, in step 705, description data 109 corresponding to the plurality of the source television channels is generated. In step 706 the combined video data stream 301, the audio data streams 104, 107 and the description data 109 are mixed to output the combined television data stream 101.

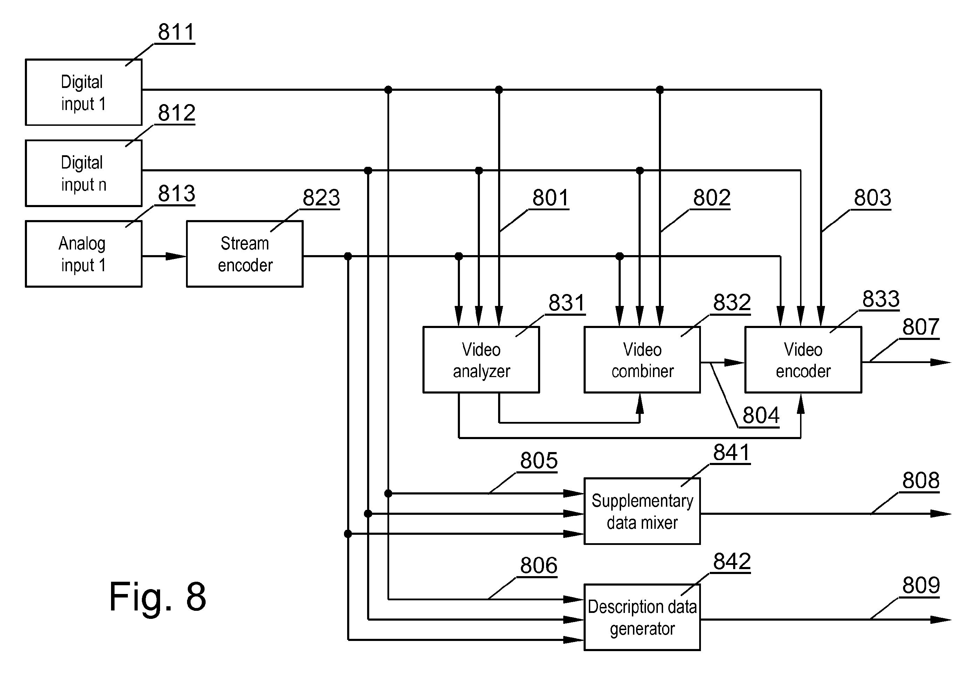

FIG. 8 shows a device for generating the combined television data stream 101. The device comprises a plurality of data inputs 811-813 configured to receive a plurality of source television channels. It is to be noted that in a basic embodiment two data inputs are present.

The inputs may be configured to receive television channel data in different formats. Some of the inputs may be connected to encoders in order to encode the received data to a format recognizable by the other elements of the device. For example, an analogue input 813 may be connected to a stream encoder 823 for encoding the received analogue signal to digital stream. A video analyzer 831 is configured to analyze the parameters 801 of the video data streams of the plurality of the source television channels and determine the structure of the combined video data stream, For example, the video analyzer 831 may detect the size of frames and calculate optimal arrangement of the source frames in a combined video data stream.

A video combiner 832 is configured to receive the source video data 802 of the plurality of streams and generate combined video frames 301 comprising a mosaic of video frames 304, 305 of the plurality of the source television channels, basing on the configuration of the structure of the combined video data stream determined by the video analyzer 831. Optionally, the video combiner 832 may perform additional operations on the source video frames, such as scaling, compression level adapting or other image parameters manipulation. The video combiner 832 may provide at its output 804 individual combined video data frames or may provide parameters identifying the structure of the video data frames with reference to video data frames of the source video data streams.

A video encoder 833 is configured to encode the combined video frames to generate the combined video data stream 102. It may receive individual combined data frames to be encoded directly 804 from the video combiner 832. Alternatively, it may receive references 804 to source frames from the video combiner 832 and receive the frames and other data, such as motion vectors, 803 from the source data streams.

The video encoder provides at its output 807 the combined video data stream 102. Furthermore, a supplementary data mixer 841 is configured to generate at its output 808 supplementary data 103, 106 comprising at least audio data streams 104, 107 corresponding to the plurality of the source television channels, by extracting the audio data 805 from the source streams. A description data generator 851 is configured to generate at its output 809 description data 109 corresponding to the plurality of the source television channels, by extracting the description data 806 from the source streams.

It can be easily recognised, by one skilled in the art, that the aforementioned method for generating the combined video data stream and the method for displaying a television channel may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

Owing to the presented method, channel change time is significantly decreased since data related to a set of channels is instantly available to a receiver and in the end the viewer. Thanks to the method disclosed, the number of tuning and buffering operations is significantly decreased. Any of the selected channels can be set as a current channel that typically will be displayed in a full screen resolution. Hence an effect of a rapid channel change is achieved.

While the technical concept presented herein has been depicted, described, and has been defined with reference to particular preferred embodiments, such references and examples of implementation in the foregoing specification do not imply any limitation on the concept. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A combined television data stream (101), comprising:
- a combined video data stream (102), comprising combined video frames (301), which comprise source video frames (304, 305) of at least two source television channels, the source video frames being arranged at spatially distinct sections of the combined video frames (301),
- at least two audio data streams (104, 107), each audio data stream comprising source audio data of one of the source television channels,
- description data (109), comprising
- video section descriptors (110), identifying the sections of the combined video frames (301), the video section descriptors (110) corresponding to each source television channel; and
- audio stream descriptors (111), identifying the audio data streams (104, 107), the audio stream descriptors (111) corresponding to each source television channel.

2. The combined television data stream according to claim 1, wherein at least two audio data streams (104, 107) comprise source audio data of one source television channel.

3. The combined television data stream according to any of claims 1 to 2, wherein the description data further comprises optional data corresponding to at least one source television channel, the optional data comprising TELETEXT data, closed captions data, software data, program guide data, source channel frame resolution and/or source channel service identifier data.

4. The combined television data stream according to any of claims 1 to 3, wherein the video section descriptors (110) identify the sections by pixel coordinates (302), (303) set within the combined video frame (301).

5. The combined television data stream according to any of claims 1 to 4, wherein it is transmitted in a single data stream.

6. The combined television data stream according to any of claims 1 to 5, wherein the source television channels share a common feature, the feature defining a common source frame size, channel genre, source audio stream language, adult rating and/or conditional access rights.

7. A method for displaying a television channel, comprising the steps of:
- receiving a combined television data stream (101) according to claim 1,
- receiving a request to display a source television channel,
- determining the video section descriptor (110) and at least one audio stream descriptor (111) corresponding to the requested source television channel,
- extracting, from the combined video data stream (102), the source video frames (304, 305) arranged at a fragment of the combined video frames (301) identified by the determined video section descriptor (110),
- setting the extracted source video frames (304, 305) as a current channel video data,
- setting the audio data stream (104, 107) identified by the determined audio stream descriptor (111) as a current channel audio data,
- processing the current channel video data and the current channel audio data so as to display the requested source television channel.

8. The method according to claim 7, further comprising the steps of:
- receiving a request to display a further source television channel,
- determining the video section descriptor (110) corresponding to the requested further source television channel,
- extracting, from the combined video data stream (102), the source video frames (304, 305) arranged at the fragment of the combined video frames (301) identified by the plurality of the determined video section descriptors (110),
- mixing the extracted source video frames (304, 305) associated with the further source television channel with the extracted source video frames (304, 305) associated with the current television channel.

9. A computer program comprising program code means for performing all the steps of the method according to any of claims 7 to 8.

10. A computer readable medium having computer-executable instructions performing all the steps of the method according to any of claims 7 to 8.

11. A television receiver comprising:
- a stream receiver (601) configured to receive a combined television data stream (101) according to claim 1,
- a request interface (602) configured to receive a request to display a source television channel,
- a stream analyzer (603) configured to determine the video section descriptor (110) and at least one audio stream descriptor (111) corresponding to the requested source television channel,
- a video extractor (604) configured to extract, from the combined video data stream (102), the source video frames (304, 305) arranged at a fragment of the combined video frames (301) identified by the determined video section descriptor (110) and to provide the extracted source video frames (304, 305) as a current channel video data to a video decoder (605), and
- a audio extractor (606) configured to provide the audio data stream (104, 107) identified by the determined audio stream descriptor (111) as a current channel audio data to an audio decoder (607).

12. A method for generating a combined television data stream (101) according to claim 1, the method comprising the steps of:
- receiving a plurality of source television channels,
- combining video frames (304, 305) of the plurality of the source television channels into combined video frames (301),
- encoding the combined video frames to form a combined video data stream (301),
- selecting audio data streams (104, 107) corresponding to the plurality of the source television channels,
- generating description data (109) corresponding to the plurality of the source television channels. and
- mixing the combined video data stream (301), the audio data streams (104, 107) and the description data (109) to output the combined television data stream (101).

13. A computer program comprising program code means for performing all the steps of the method according to claim 12.

14. A computer readable medium having computer-executable instructions performing all the steps of the method according to claim 12.

15. A device for generating a combined television data stream (101) according to claim 1, the device comprising:
- a plurality of data inputs (811-813) configured to receive a plurality of source television channels,
- a video analyzer (831) configured to analyze the parameters (801) of the video data streams of the plurality of the source television channels and determine the structure of the combined video data stream,
- a video combiner (832) configured to generate combined video frames (301) comprising a mosaic of video frames (304, 305) of the plurality of the source television channels,
- a video encoder (833) configured to encode the combined video frames to generate the combined video data stream (102),
- a supplementary data mixer (841) configured to generate supplementary data (103, 106) comprising at least audio data streams (104, 107) corresponding to the plurality of the source television channels, and
- a description data generator (851) configured to generate description data (109) corresponding to the plurality of the source television channels.
